Europäisches Patentamt

European Patent Office

Office européen des brevets

(11) Veröffentlichungsnummer : **0 174 486**
B1

# (12) EUROPÄISCHE PATENTSCHRIFT

(45) Veröffentlichungstag der Patentschrift :
07.06.89

(51) Int. Cl.⁴ : **F 16 K   3/02**

(21) Anmeldenummer : 85109639.6

(22) Anmeldetag : 31.07.85

(54) Vorrichtung zum Absperren einer Rohrleitung.

(30) Priorität : 11.09.84 DE 3433346

(43) Veröffentlichungstag der Anmeldung :
19.03.86 Patentblatt 86/12

(45) Bekanntmachung des Hinweises auf die Patenterteilung : 07.06.89 Patentblatt 89/23

(84) Benannte Vertragsstaaten :
BE DE FR GB

(56) Entgegenhaltungen :
DE--A-- 1 600 964
DE--A-- 2 502 240
GB--A-- 2 116 679
US--A-- 3 460 457

(73) Patentinhaber : KRUPP POLYSIUS AG
Graf-Galen-Strasse 17
D-4720 Beckum (DE)

(72) Erfinder : Heinemann, Otto, Dipl.-Ing.
Galileistrasse 8
D-4722 Ennigerloh (DE)
Erfinder : Hahn, Franz Dieter, Dipl.-Ing.
Im Südfelde 22
D-4720 Beckum (DE)
Erfinder : Schmits, Heinz-Herbert, Dipl.-Ing.
Berliner Strasse 6a
D-4840 Rheda-Wiedenbrück (DE)

(74) Vertreter : Tetzner, Volkmar, Dr.-Ing. Dr. jur.
Van-Gogh-Strasse 3
D-8000 München 71 (DE)

EP 0 174 486 B1

## Beschreibung

Die Erfindung betrifft eine Vorrichtung (entsprechend dem Oberbegriff des Anspruches 1) zum Absperren einer Rohrleitung, insbesondere für heiße, staubhaltige Gase.

Zur Abdichtung von Absperrschiebern für große Rohrleitungen, die heiße, staubhaltige Gase führen, sind bereits Dichtungselemente bekannt, die aus einer Schleife aus biegsamem Stahl bestehen (DE-OS 16 00 964 sowie US-PS 34 60 457). Diese Dichtungselemente sind an den beiden Enden des schleifenförmigen Querschnittes eingespannt und greifen mit dem Hauptteil des Schleifenkörpers zwischen die beiden abzudichtenden Teile, zwischen denen das schleifenförmige Dichtungselement flachgedrückt wird.

Diese bekannten Ausführungen sind mit verschiedenen Nachteilen behaftet. Bedingt durch die schleifenartige Ausbildung und den Eingriff des Dichtungselementes zwischen die beiden gegeneinander abzudichtenden Elemente (an denen das Dichtungselement an insgesamt zwei Stellen anliegt) ergibt sich ein großer Materialaufwand für die einzelnen Dichtungselemente sowie ein erheblicher Platzbedarf für ihre Unterbringung.

Zum Stand der Technik gehört weiterhin eine Absperrvorrichtung entsprechend dem Oberbegriff des Anspruches 1 (DE-OS 25 02 240), bei der das Dichtungselement durch einen im Querschnitt U-förmig gebogenen Federstahlstreifen gebildet wird, der an den freien Enden der beiden Schenkel des U an dem einen der beiden gegeneinander abzudichtenden Elemente (Schiebergehäuse oder Schieber) eingespannt ist und der in seinem mittleren Bereich zwischen den beiden Einspannstellen in dichtender Berührung mit dem anderen der beiden Elemente steht. Die eingespannten Enden des Federstahlstreifens liegen hierbei parallel zueinander.

Bei der Belastung eines solchen Dichtungselementes kann es — bedingt durch die geringe Verformbarkeit in Richtung der eingespannten Enden — zu einem scharfkantigen Ausknicken kommen. Da ferner die Art der Verformung nicht eindeutig vorherbestimmbar ist, lassen sich keine gezielten Anpreßkräfte erreichen. Schließlich kann es bei einer Verformung des bekannten Dichtungselementes zu stark ansteigenden Anpreßkräften und damit zu einem unkontrollierten Verschleiß kommen.

Der Erfindung liegt daher die Aufgabe zugrunde, unter Vermeidung der Mängel der bekannten Ausführungen eine Absperrvorrichtung entsprechend dem Oberbegriff des Anspruches 1 so auszubilden, daß auch in thermisch hochbelasteten, Staub führenden Rohrleitungen eine einwandfreie Funktion sowie eine lange Lebensdauer der Dichtungselemente gewährleistet sind.

Diese Aufgabe wird erfindungsgemäß durch die kennzeichnenden Merkmale des Anspruches 1 gelöst.

Indem die eingespannten Enden der Federstahlstreifen miteinander einen spitzen Winkel einschließen, ist der Federstahlstreifen mehr als halbkreisförmig vorgespannt (der Vorspannwinkel ist somit größer als 180° und kleiner als 270°). Dadurch ist der Federstahlstreifen besonders deformationsfreudig und ermöglicht große Federwege bei einer flachen Federkennlinie.

Die Verformung des Federstahlstreifens läuft dabei unter Belastung (etwa beim Eintauchen des Schiebers) weich und gleichmäßig ab. Da aufgrund der flachen Federkennlinie die Reibungskräfte nicht so stark zunehmen wie bei den bekannten Ausführungen, ergibt sich eine Verringerung des Verschleißes und eine Verkleinerung der notwendigen Antriebskräfte.

Erfindungsgemäß wird dabei die Verformbarkeit der an die eingespannten Enden angrenzenden Bereiche der beiden Schenkel jedes Federstahlstreifens nach außen durch zwei starre Abrollflächen begrenzt, die tangential zu den eingespannten Enden angeordnet sind. Dadurch wird erreicht, daß der Federstahlstreifen bei der Verformung auf diesen Abrollflächen glatt abrollen kann und die Gefahr eines scharfkantigen Ausknickens des Federstahlstreifens (insbesondere in der an die Einspannung angrenzenden Zone) vermieden ist.

Die erfindungsgemäße Vorrichtung zeichnet sich damit durch eine hohe Betriebssicherheit und eine hohe Standzeit aus. Aufgrund der flacheren Federkennlinie ist die Ausrichtgenauigkeit den bekannten Ausführungen deutlich überlegen.

Zweckmäßige Ausgestaltungen der Erfindung sind Gegenstand der Unteransprüche und werden im Zusammenhang mit der Beschreibung eines in der Zeichnung veranschaulichten Ausführungsbeispieles näher erläutert.

In der Zeichnung zeigen

Fig.1 eine Schemadarstellung eines erfindungsgemäßen Dichtungselementes,

Fig. 2, 3 und 4 Schnitte durch eine erfindungsgemäße Absperrvorrichtung im Bereich der oberen, seitlichen und unteren Abdichtung.

Zum Absperren einer (in der Zeichnung nicht im einzelnen dargestellten) Rohrleitung, die insbesondere für heiße, staubhaltige Gase bestimmt ist, dient ein in die Rohrleitung eingebautes Schiebergehäuse 1 und ein innerhalb dieses Schiebergehäuses 1 zwischen einer Öffnungsstellung und einer Absperrstellung beweglicher Schieber 2.

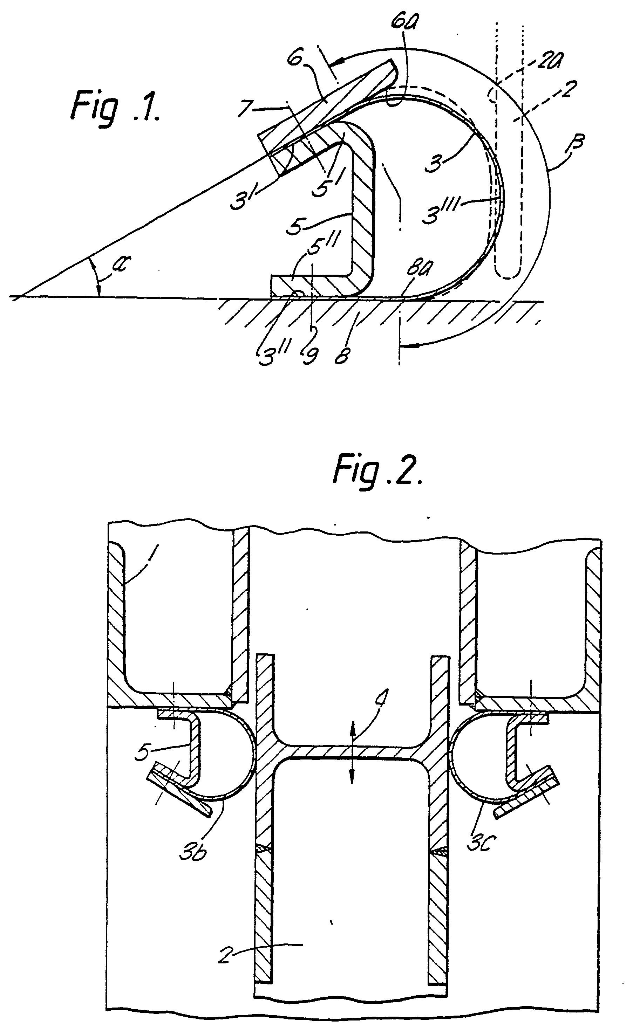

Zwischen dem Schiebergehäuse 1 und dem Schieber 2 sind verschiedene Dichtungselemente 3 bis 3e vorgesehen, deren Aufbau, Halterung und Funktion im einzelnen anhand von Fig.1 erläutert wird.

Fig. 2 zeigt dabei die Verhältnisse im Bereich der oberen Abdichtung zwischen dem Schieber 2 und dem Schiebergehäuse 1 mittels der Dichtungselemente 3b und 3c (der Schieber 2 ist hierbei in Richtung des Pfeiles 4 vertikal beweglich).

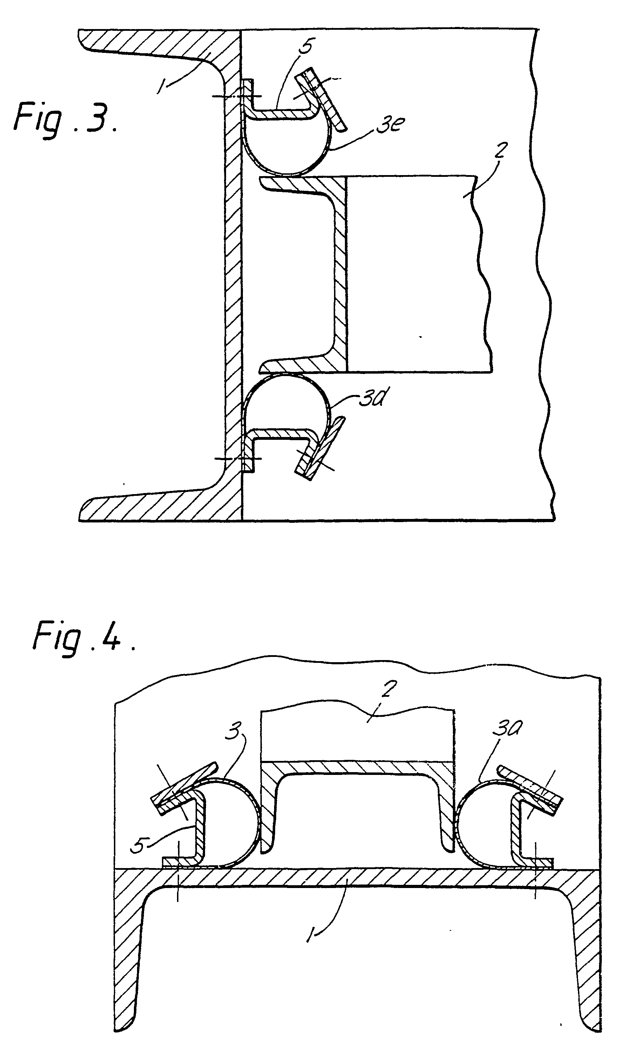

Fig. 3 veranschaulicht die seitliche Abdichtung des vertikal (senkrecht zur Zeichenebene der Fig.3) beweglichen Schiebers 2 mittels der Dichtungselemente 3d und 3e.

Fig. 4 veranschaulicht die Situation im Bereich der unteren Abdichtung. Hier dichten die Dichtungselemente 3 und 3a den Schieber 2 gegenüber dem Schiebergehäuse 1 ab.

Anhand von Fig. 1 (die der Darstellung der linken Abdichtung in Fig. 4 entspricht) sei nun der Aufbau, die Halterung und die Funktion des erfindungsgemäßen Dichtungselementes 3 erläutert (alle übrigen Dichtungselemente 3a bis 3e entsprechen nach Aufbau, Einspannung und Funktion dem Dichtungselement 3).

Das Dichtungselement 3 besteht aus einem Federstahlstreifen, der im Querschnitt etwa U-förmig gebogen ist und dessen Schenkel an ihren freien Enden 3', 3" eingespannt sind. Das Ende 3' ist zwischen dem Steg 5' eines Halteprofiles 5 und einem äußeren Spannelement 6 mittels einer nur angedeuteten Verschraubung 7 eingespannt, während das andere Ende 3" des Dichtungselementes 3 zwischen einem Steg 5" des Halteprofiles 5 und einem äußeren Spannelement 8 (das vom Schiebergehäuse 1 gebildet wird) mittels einer Verschraubung 9 eingespannt ist.

Die beiden Stege 5', 5" des Halteprofiles 5 sind so abgebogen, daß sie miteinander einen spitzen Winkel α einschließen, der zwischen 5 und 90° vorzugsweise zwischen 15 und 45°, liegt, und beim dargestellten Ausführungsbeispiel etwa 30° beträgt. Dadurch ergibt sich für das Dichtungselement 3 ein Einspannwinkel β zwischen 185 und 270° (beim dargestellten Ausführungsbeispiel von etwa 210°).

Die äußeren Spannelemente 6 und 8 sind über die Einspannzonen (d. h. über die Länge der Stege 5', 5" des Halteprofiles 5) hinaus in Richtung auf den freiliegenden Teil des Dichtungselementes 3 verlängert und bilden hier Abrollflächen 6a, 8a, die tangential zu den eingespannten Enden 3', 3" des Dichtungselementes 3 verlaufen.

Etwa in seinem mittleren Bereich zwischen den beiden Einspannstellen (d. h. im mittleren Bereich zwischen den eingespannten Enden 3', 3") kommt das Dichtungselement 3 mit dem abzudichtenden Element (d. h. hier mit der Fläche 2a des Schiebers 2) in Berührung und wird dabei in der in Fig. 1 gestrichelt angedeuteten Weise verformt. Wird die mittlere Zone 3''' des Dichtungselementes 3 nach innen (in Richtung auf das Halteprofil 5) gedrückt, so legt sich das Dichtungselement mit den an die eingespannten Enden 3', 3" angrenzenden Zonen an die Abrollflächen 6a, 8a an. Diese Abrollflächen 6a, 8a begrenzen die Verformbarkeit der beiden Schenkel des Dichtungselementes 3 nach außen hin und verhindern ein Abknicken des das Dichtungselement 3 bildenden Federstahlstreifens in dem besonders gefährdeten Bereich unmittelbar angrenzend an die eingespannten Enden 3', 3".

Die Länge der Abrollflächen 6a, 8a ist so gewählt, daß der das Dichtungselement 3 bildende Federstahlstreifen auch bei der maximalen Verformung, die er im Betrieb erfährt, eine kontinuierliche, knickfreie Krümmung in gleichbleibender Richtung aufweist (so daß also die Abrollflächen 6a, 8a nach wie vor Tangenten an das Dichtungselement 3 bleiben).

Während bei dem dargestellten Ausführungsbeispiel die Dichtungselemente stets paarig eingesetzt sind, ist im Rahmen der Erfindung selbstverständlich auch eine einseitige Anordnung möglich. So können etwa bei einer senkrechten Rohrleitung mit waagerecht eingebautem Schieber auf der Gegenseite Bolzen die Führung des Schiebers übernehmen.

**Patentansprüche**

1. Vorrichtung zum Absperren einer Rohrleitung, insbesondere für heiße, staubhaltige Gase, enthaltend

   a) ein zum Einbau in die Rohrleitung bestimmtes Schiebergehäuse (1),

   b) einen innerhalb des Schiebergehäuses (1) zwischen einer Öffnungsstellung und einer Absperrstellung beweglichen Schieber (2),

   c) zwischen dem Schiebergehäuse (1) und dem Schieber (2) angeordnete Dichtungselemente (3 bis 3e), die je aus einem im Querschnitt etwa U-förmig gebogenen Federstahlstreifen bestehen, der an den freien Enden der beiden Schenkel des U an dem einen der beiden gegeneinander abzudichtenden Elemente (Schiebergehäuse oder Schieber) eingespannt ist und an einer Stelle in seinem gekrümmten Bereich zwischen den beiden Einspannstellen in dichtender Berührung mit dem anderen der beiden Elemente (Schieber oder Schiebergehäuse) steht,
   gekennzeichnet durch folgende Merkmale :

   d) die eingespannten Enden (3', 3") der einzelnen Dichtungselemente (3 bis 3e) schließen miteinander einen spitzen Winkel (α) zwischen 5° und 90° ein ;

   e) die Verformbarkeit der an die eingespannten Enden (3', 3") angrenzenden Bereiche der beiden Schenkel jedes Dichtungselementes (3 bis 3e) wird nach außen hin durch zwei starre Abrollflächen (6a, 8a) begrenzt, die tangential zu den eingespannten Enden und angrenzend an diese angeordnet sind.

2. Vorrichtung nach Anspruch 1, dadurch gekennzeichnet, daß die eingespannten Enden (3', 3") der Dichtungselemente (3 bis 3e) miteinander einen Winkel (α) zwischen 15 und 45°, einschließen.

3. Vorrichtung nach Anspruch 1, bei der die freien Enden (3', 3") der beiden Schenkel der Dichtungselemente (3 bis 3e) zwischen je zwei Spannelementen (5, 6, 8) eingespannt sind, dadurch gekennzeichnet, daß die Abrollflächen (6a, 8a) durch Verlängerung der äußeren Spannelemente (6, 8) gebildet werden.

4. Vorrichtung nach Anspruch 1, gekennzeichnet durch eine solche Länge der Abrollflächen (6a, 8a), daß das Dichtungselement (3 bis 3e) auch bei der maximalen Verformung eine kontinuierliche, knickfreie Krümmung in gleichbleibender Richtung aufweist.

## Claims

1. Device for shutting off a pipe, particularly for hot, dust-laden gases, containing
   a) a gate valve housing (1) intended for installation in the pipe,
   b) a gate (2) which is movable inside the gate valve housing (1) between an open position and a shut-off position,
   c) sealing elements (3 to 3e) which are arranged between the gate valve housing (1) and the gate (2) and each consist of a spring steel strip which is bent with an approximately U-shaped cross-section, is gripped on the free ends of the two arms of the U on one of the elements (gate valve housing or gate) which are to be sealed against each other and is in sealing contact with the other one of the elements (gate or gate valve housing) at a point in its curved region between the two gripping points, characterised by the following features :
   d) the gripped ends (3', 3") of the individual sealing elements (3 to 3e) enclose an acute angle (α) between 5° and 90° with each other ;
   e) the deformability of the regions of the two arms of each sealing element (3 to 3e) adjoining the gripped ends (3', 3") is limited towards the exterior by two rigid rolling surfaces (6a, 8a) which are arranged tangentially with respect to the gripped ends and adjoining the latter.

2. Device as claimed in claim 1, characterised in that the gripped ends (3', 3") of the sealing elements (3 to 3e) enclose an angle (α) between 15 and 45° with each other.

3. Device as claimed in claim 1, in which the free ends (3', 3") of the two arms of the sealing elements (3 to 3e) are each gripped between two clamping elements (5, 6, 8), characterised in that the rolling surfaces (6a, 8a) are formed by extension of the outer clamping elements (6, 8).

4. Device as claimed in claim 1, characterised in that the length of the rolling surfaces (6a, 8a) is such that the sealing element (3 to 3e) has a continuous kink-free curvature in a constant direction even at the maximum deformation.

## Revendications

1. Dispositif de fermeture d'une canalisation, en particulier de gaz poussiéreux et chauds, comprenant :
   a) une cage (1) destinée à être montée dans la canalisation,
   b) une vanne (2) mobile entre une position d'ouverture et une position de fermeture à l'intérieur de ladite cage (1),
   c) des éléments d'étanchéité (3 à 3e) disposés entre la cage (1) et la vanne (2) et dont chacun est constitué d'un ruban d'acier à ressort recourbé approximativement en étrier en coupe transversale et dont les extrémités libres des deux branches de l'étrier sont fixées à l'un desdits deux organes entre lesquels il s'agit d'établir l'étanchéité (cage ou vanne), chacun desdits éléments entrant en contact d'étanchéité avec l'autre desdits deux organes (vanne ou cage) en un emplacement de sa partie recourbée qui est compris entre les deux lieux de fixation, caractérisé par les particularités suivantes :
   d) les extrémités fixées (3', 3") des éléments d'étanchéité individuels (3 à 3e) inscrivent entre elles un angle aigu (α) compris entre 5 et 90° ;
   e) la déformabilité des zones des deux ailes de chaque élément d'étanchéité (3 à 3e) qui sont voisines des extrémités fixées (3', 3") est limitée vers l'extérieur par deux surfaces rigides de déroulement (6a, 8a) qui sont tangentes auxdites extrémités fixées et sont voisines de ces dernières.

2. Dispositif selon la revendication 1, caractérisé en ce que les extrémités fixées (3', 3") des éléments d'étanchéité (3 à 3e) inscrivent entre elles un angle (α) compris entre 15 et 45°.

3. Dispositif selon la revendication 1, dont chacune des extrémités libres (3', 3") des deux ailes des éléments d'étanchéité (3 à 3e) est serrée entre deux éléments de fixation (5, 6, 8), caractérisé en ce que les surfaces de déroulement (6a, 8a) sont formées par prolongement des éléments extérieurs de fixation (6, 8).

4. Dispositif selon la revendication 1, caractérisé en ce que la longueur des surfaces de déroulement (6a, 8a) est calculée de manière que l'élément d'étanchéité (3 à 3e) présente une courbure continue, sans coude et dans une direction constante, même sous déformation maximale.

Fig .1.

Fig .2.

Fig . 3 .

Fig . 4 .